# EUROPEAN PATENT SPECIFICATION

(11) **EP 3 524 339 B1**
(45) Date of publication and mention of the grant of the patent: **19.07.2023**
(21) Application number: 18382078.6
(22) Date of filing: 12.02.2018
(51) Int. Cl.: B01D 67/00, B01D 69/06, B01D 71/02, B32B 37/10, B32B 38/00, C01B 32/158, C01B 32/168, B82Y 40/00, C08J 5/18

(54) **METHOD FOR INCREASING THE THICKNESS OF A CARBON NANOTUBE SHEET STRUCTURE**
VERFAHREN ZUR ERHÖHUNG DER DICKE EINER KOHLENSTOFFNANORÖHRENBOGENSTRUKTUR
PROCÉDÉ PERMETTANT D'AUGMENTER L'ÉPAISSEUR D'UNE STRUCTURE DE FEUILLE DE NANOTUBES DE CARBONE

(43) Date of publication of application: 14.08.2019
(73) Proprietor: Fundación Tecnalia Research & Innovation, 20009 Donostia-San Sebastian, Guipuzcoa (ES); Sisteplant S.L., 48160 Derio - Vizcaya (ES)
(72) Inventor: CENIGAONAINDÍA, Xabier, 48160 Derio - Vizcaya (ES); HERNÁN, Angel, 48160 Derio - Vizcaya (ES); FLOREZ, Sonia, 20009 San Sebastián - Guipúzcoa (ES); GAZTELUMENDI, Idoia, 20009 San Sebastián - Guipúzcoa (ES); SEDDON, Richard, 20009 San Sebastián - Guipúzcoa (ES); GARCIA, Jose Ramón, 20009 San Sebastián - Guipúzcoa (ES); CHAPARTEGUI, Maialen, 20009 San Sebastián - Guipúzcoa (ES)
(74) Representative: Balder IP Law, S.L.

(56) References cited:
- EP-A1- 1 112 224
- WO-A1-2016/182018
- JP-A- 2016 134 215
- US-A1- 2010 105 830
- US-A1- 2016 177 511
- US-A1- 2017 210 627
- HENRY PAPA ET AL: "Fabrication of Functionalized Carbon Nanotube Buckypaper Electrodes for Application in Glucose Biosensors", BIOSENSORS, vol. 4, no. 4, 11 November 2014 (2014-11-11), pages 449-460, XP055199993, DOI: 10.3390/bios4040449
- JI CHA ET AL: "Effect of Continuous Multi-Walled Carbon Nanotubes on Thermal and Mechanical Properties of Flexible Composite Film", NANOMATERIALS, vol. 6, no. 10, 12 October 2016 (2016-10-12), page 182, XP055471668, DOI: 10.3390/nano6100182

## Description

### TECHNICAL FIELD

The present invention relates to the manufacturing of materials and structures. More particularly, it refers to methods and systems for manufacturing materials and structures from carbon nanotubes, also referred to as buckypaper (BP).

### STATE OF THE ART

Carbon nanotubes (CNTs) are used in the manufacturing of high performance material and devices. EP1112224A1 discloses a process for producing single-walled carbon nanotubes. Multi-walled carbon nanotubes have for example been discussed by JI CHA et al in "Effect of Continuous Multi-Walled Carbon Nanotubes on Thermal and Mechanical Properties of Flexible Composite Film", Nanomaterial, vol. 6, n° 10, 12 October 2016, page 182. Processes for the continuous manufacturing of CNT-based BPs have been disclosed in the last years. Such processes typically include making a suspension of CNTs dispersed in a liquid medium and filtering the suspension by moving a filter membrane through the suspension, such that the CNTs are deposited directly on the filter membrane as the fluid medium flows through the filter membrane. The continuous BP is then dried, after which it can be separated from the filter membrane. An example of this process is disclosed in US7459121B2. JP2016134215A discloses methods for drying sheets containing carbon nanotubes.

US2017/210627A1 discloses methods and devices for the continuous production of a network of carbon nanotubes into a continuous sheet structure. US2016/0177511A1 discloses a method for continuous manufacturing of a CNT sheet in which a porous plate flanked by two guiding rollers acts as filtration area and is disposed within a suspension chamber filled with a suspension of CNTs. A filter paper is advanced to the filtration area. When vacuum pressure is applied, CNTs are deposited on the portion of the filter paper in contact with the filtration area. The portion of the filter paper with the deposited CNTs is then advanced to a drying area. After drying, the filter paper is separated from the continuous sheet of CNTs, thus obtaining a roll of filter paper and a roll of continuous sheet of CNTs.

A similar approach is disclosed in WO2016/019143A1, in which a volume of a CNT suspension is passed over a filter material and drawn through the filter material to provide a uniform dispersion of the CNTs over the filter material. The filter material is in the form of a continuous porous belt. The filtered CNT structure is dried prior to removing the CNT sheet from the porous filter material.

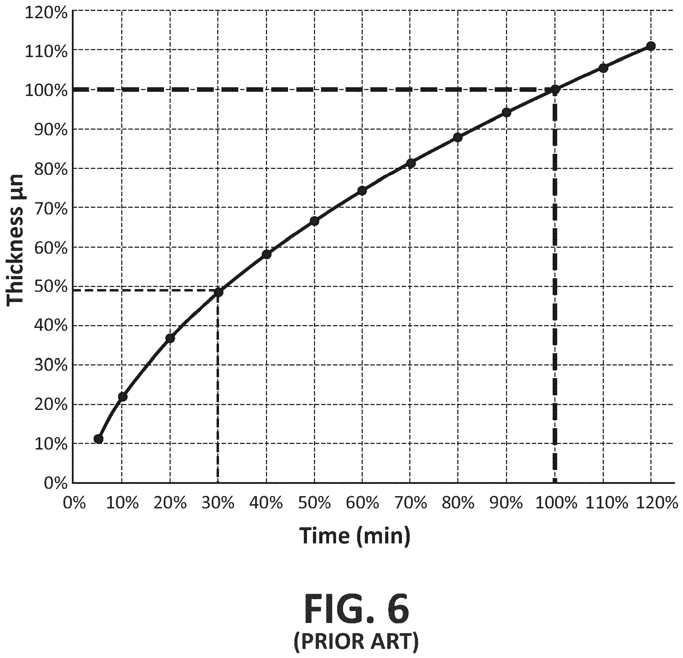

However, the time required for obtaining a sheet of CNTs of a predetermined thickness with the conventional manufacturing processes is relatively high, as a consequence of which these processes are of poor efficiency. Moreover, as the thickness of the CNT sheet increases, the thickness increasing rate slows down. In other words, the thickness vs filtering time curve has a non-linear behavior, as shown for example in figure 6, which shows a thickness vs filtration time graph in a conventional BP continuous manufacturing pilot line. The thickness of the BP is expressed in µm (microns, 10⁻⁶ meters), while the time is expressed in minutes. As can be seen in figure 6, when targeting 100% of the thickness, in 30% of the nominal time, 50% of the thickness is generated. Thickness generation slows down as BP thickness increases. This effect is even greater for larger target thickness.

### DESCRIPTION OF THE INVENTION

The present disclosure provides a new method for increasing the thickness of a sheet of CNTs or buckypaper (BP). A buckypaper is a thin sheet made from an aggregate of carbon nanotubes or carbon nanotube grid paper. Because when manufacturing a CNT sheet, its thickness increase rate is reduced as its thickness increases, obtaining the last portion of aimed thickness (typically several microns or µm) requires more time than the previous ones. The present disclosure provides a method that enables increasing the last portion of aimed thickness in a much faster process, in such a way that the above-mentioned slowing effect is minimized and the time required for obtaining the sheet of CNTs of a desired thickness is reduced. So, the aimed thickness of BP may be obtained as follows: First, a first amount of thickness of BP may be obtained by any conventional method, and then, a second amount of thickness (the remaining amount until the desired thickness is reached) may be additionally obtained by means of the method of the present disclosure. As a matter of example, the first amount of thickness may be around 85% of the aimed thickness. This may result in a time saving of about 25% for a same aimed thickness.

The buckypaper (or sheet of CNTs) whose thickness is increased is obtained in the form of a continuous sheet. In the context of the present disclosure, a continuous sheet of material is an elongated sheet having a length that is orders of magnitude greater than the width of the sheet. The continuous sheet of material may be provided in the form of a roll of the sheet material. A continuous sheet of material may be obtained by performing a continuous manufacturing process. In the context of the present disclosure, a batch portion or single portion of material is a portion having length and width of same or similar order of magnitude.

The sheet of CNTs may be circular or rectangular or of any other shape. When it is rectangular, the sheet may be continuous (for example to be provided in a roll) or noncontinuous, also referred to as batch or portion (for example a portion of length and width of similar order of magnitude). The width and length of the sheets of CNTs may vary depending on the manufacturing process. The claims cover only continuous sheets of CNTs.

A method and system for drying a wet sheet of CNTs is also disclosed, the drying method being continuous, intermittent or static. The drying method of this disclosure optimizes the drying stage in a process of manufacturing a sheet of CNTs, the sheets being continuous. With the proposed drying method, the thickness of the sheet of CNTs is increased, and therefore the manufacturing speed is also increased.

A method and system for manufacturing a sheet of CNTs is also disclosed, in which the stage of drying the wet sheet of CNTs (continuous) is optimized.

The inventors have observed that, when manufacturing a sheet of CNTs by applying vacuum and a filter material, for example as disclosed in WO2016/019143A1, some CNTs get trapped in the pores of the mentioned filter. The inventors have also observed that, due to such trapping forces, the dimensions of the sheet of CNTs cannot change during drying. In the present disclosure, the wet sheet of CNTs is separated from any filter material. In other words, the wet sheet of CNTs is dried without filter material or support. This way the effect of the CNTs trapped in the filter material pores is eliminated, thus enabling changes in dimensions during drying, in particular increasing the thickness. This means that, when the process for increasing the thickness of a sheet of CNTs is applied during the manufacturing process of a sheet of CNTs, the wet sheet of CNTs is dried after separating the CNTs sheet from the filter material.

The methods and systems of this disclosure enable the obtaining of continuous sheets of CNTs at a relatively fast rate compared to conventional setups due to the increasing in thickness achieved in the proposed drying stage. The areal weight of the sheet of CNTs prior to applying the drying method of the present disclosure, may be adjusted by tailoring the manufacturing conditions, such as the concentration of the CNT suspension, the applied vacuum pressure, the filtration speed, the filtration duration, the type of filter (for example of the grillage) or a combination thereof, during the manufacturing process.

The thickness of the sheets of CNTs obtained in the method of the present disclosure, that is to say, dried after separating the sheet of CNTs from any filter support, has been observed to be substantially higher than the thickness of sheets of CNTs dried prior to separating the sheet of CNTs from the filter support, considering identical sheets of CNTs and identical drying conditions. In particular, it has been observed that the thickness of sheets of CNTs of the present disclosure (dried without any support material, that is to say, after separating the sheet of CNTs from the any support material) is up to 15% larger than the thickness of sheets of CNTs dried prior to separating the sheet of CNTs from any support. In some embodiments of the invention, it is up to 13% larger, or up to 11% larger, or up to 8% larger or up to 6% larger.

In some embodiments of the invention, the thickness of the resulting sheet of CNTs, which has been increased up to 15% with respect to drying before separation of sheet and support, varies between 40 and 100 µm (1 µm = 1 micron = 10⁻⁶ meters).

In order to apply the method for increasing the thickness of a sheet of CNTs, a wet sheet of CNTs is used. The wet sheet of CNTs is obtained as follows: in a container filled with a liquid solution comprising CNTs at certain concentration, submerging a vacuum tank having a lower surface forming a grillage; moving an elongated filtering membrane along the lower surface of the vacuum tank while vacuum is applied on the elongated filtering membrane in such a way that in the surface of the filtering membrane opposed to the surface in contact with the lower surface of the vacuum tank CNTs are deposited forming a continuous sheet of CNTs of constant thickness; taking the filtering membrane together with the continuous sheet of CNTs out of the container; optionally washing the continuous sheet of CNTs disposed on the filtering membrane or on a support element in a second container filled with cleaning solution; taking the continuous sheet of CNTs together with the filtering membrane or the support element (54) out of the second container. In order to apply the method of the invention, the continuous sheet of CNTs is separated from the filtering membrane.

A first aspect of the invention refers to a method for increasing the thickness of a sheet of CNTs, according to claim 1.

According to the invention, the sheet of CNTs is continuous.

In embodiments of the invention, the drying stage implies a continuous advancing of the sheet of CNTs, or an intermittent advancing thereof, or is static.

In embodiments of the invention, the sheet of CNTs is a continuous sheet of CNTs and the drying of the wet continuous sheet of CNTs is done as follows: moving forward the wet continuous sheet of CNTs in a longitudinal direction until a portion thereof is disposed within a drying unit comprising the heat source, the heat source being configured to provide heat to a drying area, the drying unit further comprising screening means for delimiting said drying area, in such a way that the portion of continuous sheet of CNTs is subject to heat only while it is under the drying area.

The drying unit may comprise a plurality of rollers configured to rotate freely and to guide the continuous sheet of CNTs along its longitudinal direction, forcing the continuous sheet of CNTs to adopt soft convex and concave curvatures in an alternate way.

The plurality of rollers may comprise a central roller disposed under the drying area and lateral rollers disposed under the screening means.

The drying unit may comprise two conveyor belts configured to guide the continuous sheet of CNTs in its longitudinal direction, the conveyor belts being longitudinally disposed above and below the continuous sheet of CNTs, respectively.

At least one of the conveyor belts may be made of a porous material or comprises a grillage, in order to favour the entrance of heat and also to favour liquid evaporation, therefore reducing the drying time.

According to the invention, the heating source is an infrared irradiation source.

Because the wet sheet of CNTs is dried without the filtering support, with which it has been manufactured, the thickness of the resulting sheet of CNTs is increased. The resulting sheet of CNTs has uniform thickness increase without causing any irregular deformations such as wrinkles and buckling.

Also disclosed there is a method for manufacturing a continuous sheet of CNTs, comprising: in a container filled with a liquid solution comprising CNTs at certain concentration, submerging a vacuum tank having a lower surface forming a grillage; moving an elongated filtering membrane along the lower surface of the vacuum tank while vacuum is applied on the elongated filtering membrane in such a way that in the surface of the filtering membrane opposed to the surface in contact with the lower surface of the vacuum tank CNTs are deposited forming a continuous sheet of CNTs of constant thickness; taking the filtering membrane together with the continuous sheet of CNTs out of the container; separating the continuous sheet of CNTs from the filtering membrane drying the continuous sheet of CNTs by applying the method already disclosed.

Prior to separating the continuous sheet of CNTs from the filtering membrane or the support element, the method may comprise washing the continuous sheet of CNTs disposed on the filtering membrane or on a support element in a second container filled with cleaning solution; taking the continuous sheet of CNTs together with the filtering membrane or the support element out of the second container.

Thanks to the optimized drying stage, in which the sheet of CNTs is separated from the filter support with which it has been manufactured before drying the sheet of CNTs, the invention provides a sheet of CNTs with increased thickness with respect to conventional ones, considering similar conditions (filtering and optionally washing stage). The resulting sheet of CNTs has uniform thickness increase without causing any irregular deformations such as wrinkles and buckling.

Also disclosed there is a system for increasing the thickness of a sheet of CNTs , the system comprising a drying unit comprising a heat source configured to provide heat to a drying area, the drying area being configured to receive the sheet of CNTs.

In embodiments of the invention, the sheet of CNTs is continuous, the drying area being configured to receive the wet continuous sheet of CNTs as it moves forward in its longitudinal direction, the drying unit further comprising screening means for delimiting said drying area, in such a way that the portion of continuous sheet of CNTs is subject to heat only until while it is under the drying area.

In embodiments of the invention, the drying area may comprise means for preventing deformation of the continuous sheet of CNTs during the drying stage, said means being either a plurality of rollers configured to rotate freely and to guide the continuous sheet of CNTs along its longitudinal direction, forcing the continuous sheet of CNTs to adopt soft convex and concave curvatures in an alternate way, or two conveyor belts configured to guide the continuous sheet of CNTs in its longitudinal direction.

Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

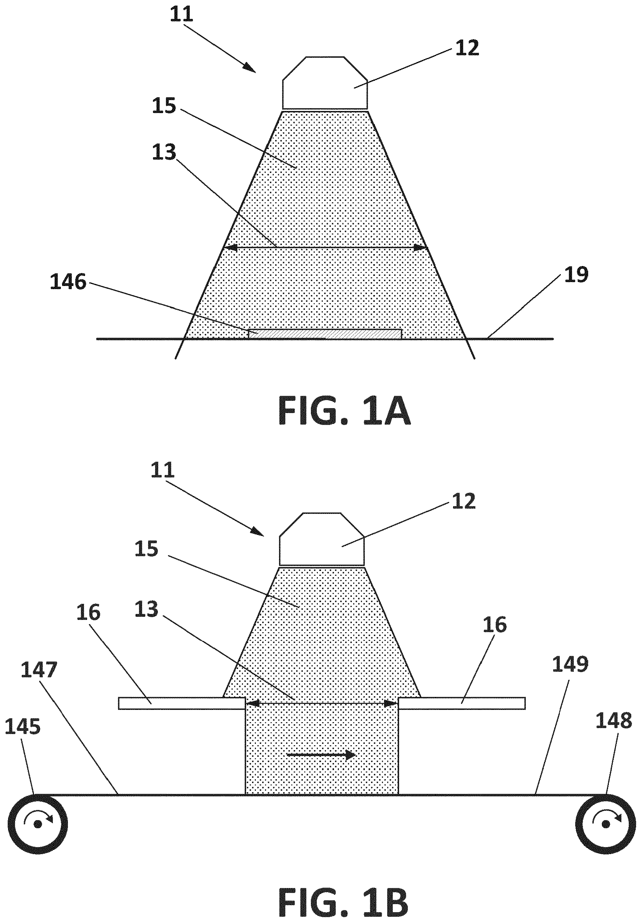

Figure 1A, which is not according to the invention, shows a schematic representation of a first system for carrying out the method of increasing the thickness of a sheet of CNTs of the present disclosure, or for carrying out the method of drying a sheet of CNTs of the present disclosure. The shown configuration is suitable for increasing the thickness of a batch sheet of CNTs, that is to say, a portion of sheet of CNTs, in which a heat source and a drying area are shown.
Figure 1B shows a schematic representation of a second system for carrying out the method of increasing the thickness of a sheet of CNTs of the present disclosure, or for carrying out the method of drying a sheet of CNTs of the present disclosure. The shown configuration is suitable for increasing the thickness of a continuous sheet of CNTs, in which a heat source and a drying area are shown in a direct roll to roll configuration.

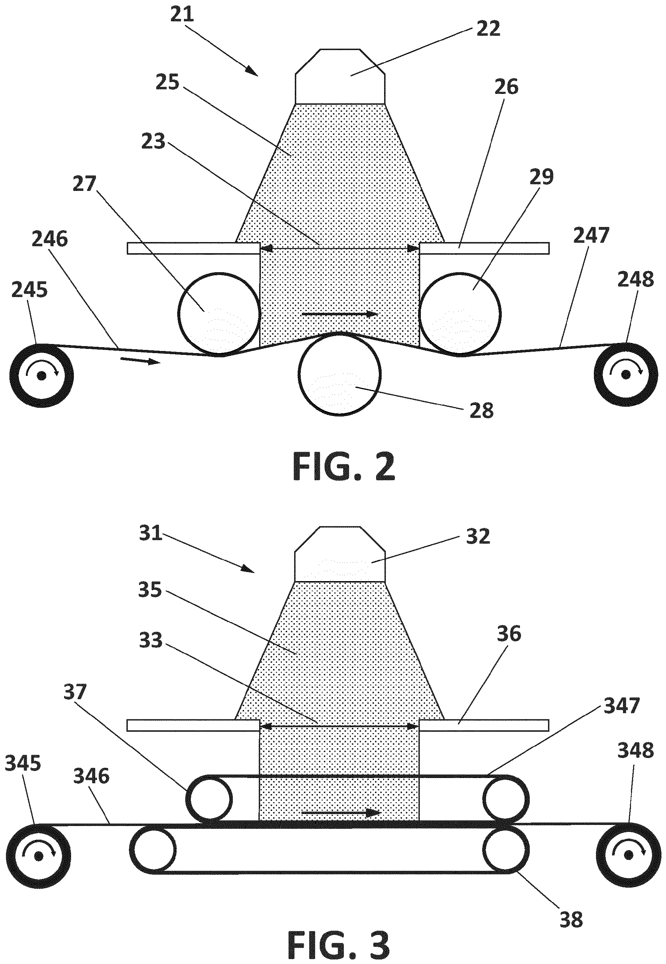

Figure 2 shows a schematic representation of a third system for carrying out the method of increasing the thickness of a sheet of CNTs of the present disclosure, or for carrying out the method of drying a sheet of CNTs of the present disclosure. The shown configuration is suitable for increasing the thickness of a continuous sheet of CNTs, in which a heat source and a drying area are shown in a configuration including CNT sheet straightening rolls.
Figure 3 shows a schematic representation of a fourth system for carrying out the method of increasing the thickness of a sheet of CNTs of the present disclosure, or for carrying out the method of drying a sheet of CNTs of the present disclosure. The shown configuration is suitable for increasing the thickness of a continuous sheet of CNTs, in which a heat source and a drying area are shown in a configuration including double supporting belts.

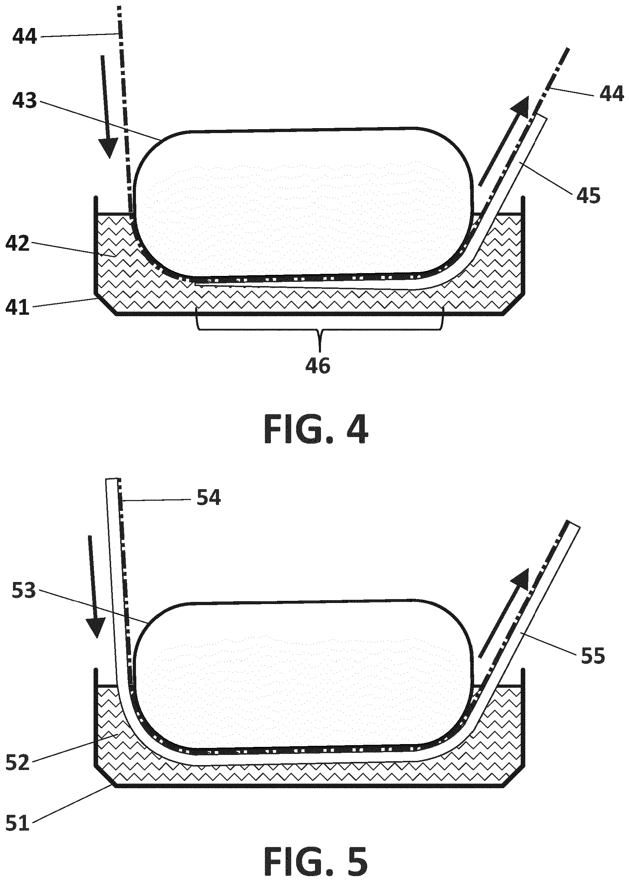

Figure 4 shows a schematic representation of a filtering stage in a conventional method for manufacturing a wet continuous sheet of CNTs.
Figure 5 shows a schematic representation of a washing stage in a conventional method for manufacturing a wet continuous sheet of CNTs according to embodiments of the invention.
Figure 6 shows a thickness vs filtration time graph in a conventional BP continuous manufacturing pilot line.

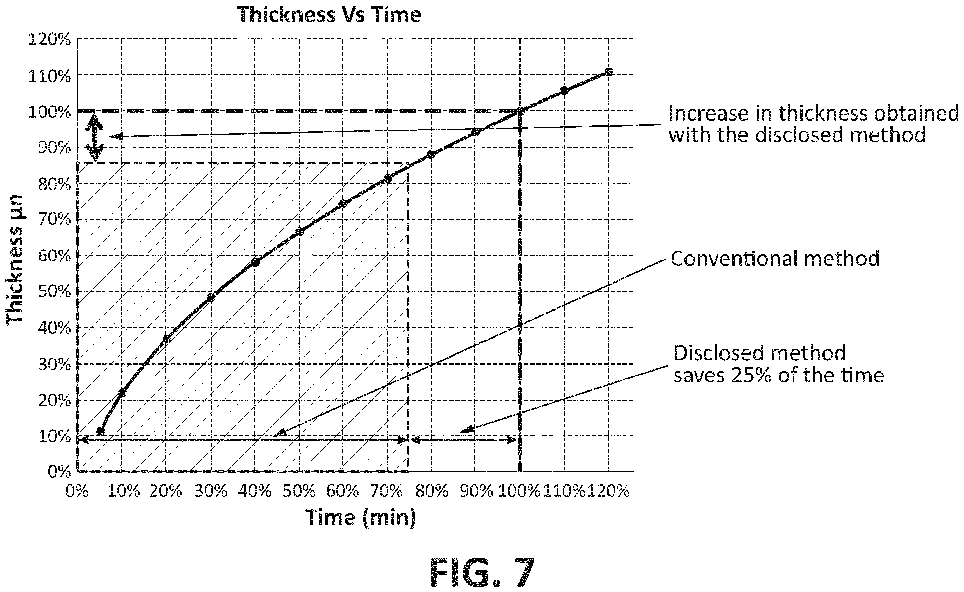

Figure 7 shows the graph of figure 6, in which the time saving obtained when applying the method of the present disclosure is remarked.

### DESCRIPTION OF A WAY OF CARRYING OUT THE INVENTION

Figures 1A, 1B, 2 and 3 show different embodiments of systems for increasing the thickness of a sheet of CNTs, or for drying a sheet of CNTs. The sheet of CNTs that is subject to the method of the invention must be wet. The sheet of CNTs may be wet because it has left a filtering stage or a washing stage in a process for manufacturing sheets of CNTs, as described in relation with figures 4 and 5. Alternatively, in an example not falling under the scope of the claims, the sheet of CNTs may be wet because an already dry sheet of CNTs (which is dry for example because it has been manufactured well in advanced) has been soaked in an aqueous solution on purpose in order to apply the method of the invention. In embodiments of the invention, the sheet of CNTs is preferably totally wet, for example because it has just left a filtering stage such as the one shown in figure 4, or a washing stage such as the one shown in figure 5.

As a matter of example, but without limitation, a possible method that may be used for manufacturing a wet sheet of CNTs is disclosed in view of figures 4-5. In this case, the manufactured sheet of CNTs is continuous and stored in rolls. In figure 4, a filtering stage is shown. In figure 5, an optional washing stage is shown. A similar approach may be applied, mutatis mutandis, for manufacturing batch sheets of CNTs (not continuous sheets provided for example in rolls). However, only continuous sheets are covered by the claims.

Figure 4 shows a schematic representation of a filtering stage of a process for manufacturing a wet continuous sheet of CNTs. A container 41 is filled with a liquid solution 42 comprising CNTs at certain concentration. A vacuum tank 43 is submerged in the container 41. The vacuum tank 43 has a lower surface forming a grillage. An elongated filtering membrane 44 is moved along the lower surface of the vacuum tank 43, at a certain speed, while constant vacuum is applied to the filtering membrane 44 in a constant way by means of a vacuum valve, not illustrated, in order to remove solution 42 from the container 41. This way, CNTs are deposited on the surface of the filtering membrane 44 opposed to the surface in contact with the lower surface of the vacuum tank 43, forming a continuous sheet of CNTs 45 of substantially constant thickness. The filtering membrane 44 may be provided in rolls, not illustrated, that are unrolled, typically in an automatic way, while the unrolled membrane 44 moves into the container 41. Similarly, the filtering membrane 44 with the continuous sheet of CNTs 45 deposited thereon may be rolled up while it leaves the container 41, forming a roll (not shown). In figure 4, the filtering area, in which the CNTs are deposited on a portion of the filtering membrane 44, is identified and referred to as 46. The speed of this stage depends on the desired thickness of the sheet of CNTs 45.

After the filtering stage of figure 4, the continuous sheet of CNTs may enter a washing stage, as shown in figure 5. In figure 5, the filtering membrane 54, together with the continuous sheet of CNTs 55, is moved into a second container 51 filled with cleaning solution 52. Another vacuum tank 53 is submerged in the second container 51. Constant vacuum is applied by means of a vacuum valve, in order to remove cleaning solution from the container, in such a way that the continuous sheet of CNTs 55 is washed in contact with the cleaning solution. The filtering membrane 54 with the cleaned continuous sheet of CNTs 55 continuously leaves the container 51 in a wet state. The applied vacuum pressure and the speed may be tailored in order to control the characteristics of the wet continuous sheet of CNTs 55.

Next, different embodiments of the drying stage for increasing the thickness of a sheet of CNTs according to the present invention are disclosed. The sheet of CNTs must be wet (for example, as it comes from the washing stage illustrated in figure 5). The wet sheet of CNTs is dried without the filter support used to manufacture that sheet of CNT.

In other words, the wet sheet of CNTs is naked, that is to say, separated from the filter support (for example filtering membrane) with which it leaves a filtering stage (for example the one in figure 4), or separated from the support with which it leaves a washing stage (for example the one in figure 5). This means that, when the process for increasing the thickness of a sheet of CNTs is applied during the manufacturing process of a sheet of CNTs, the wet sheet of CNTs is dried after separating the CNT sheet from the filter support. Or, in an example not falling under the scope of the claims, when the process for increasing the thickness of a sheet of CNTs is applied long after the manufacturing process of the sheet of CNTs, for example when the sheet of CNTs is provided together with a support, the sheet of CNTs is separated from the support, then soaked in an aqueous solution, and finally the drying process for increasing its thickness, according to the present disclosure, is applied.

For example, if the method for increasing the thickness of the sheet of CNTs is applied after the washing stage shown in figure 5, during a manufacturing process of sheets of CNTs, the continuous sheet of CNTs 55 is separated from the filtering material 54 prior to the drying stage. A roll (not shown) comprising the wet continuous sheet of CNTs 55 together with any support, is continuously unrolled. While it is unrolled, the sheet of CNTs is separated from any filtering or support element.

Figure 1A, not falling under the scope of the claims, shows a configuration is suitable for increasing the thickness of a batch portion of sheet of CNTs 146. A drying unit 11 is shown. The wet sheet of CNTs 146 is disposed on a surface 19 subject to the heat 15 provided by a heat source 12. The heat source 12 is configured to provide heat 15 to a drying area 13, under which or within which the sheet of CNTs 146 is placed. The heat source 12 may be movable. The static (single portion) of sheet of CNTs 146 is thus exposed to heat 15. After certain time, which depends on the original thickness of the sheet of CNTs 146, the sheet of CNTs is dried. The heating source 12 may be implemented in different ways. According to the invention, an infrared (IR) irradiation source is used. In embodiments not falling under the scope of the claims, a convection source or hot air source is used. Other radiation sources, not falling under the scope of the claims, such as a ultra-violet (UV) irradiation source or an electrical resistance (ER) radiation source, may be used instead. The thickness of the resulting dry sheet of CNTs has been increased.

Figure 1B shows a schematic representation of a second system for carrying out the method of the invention. This system is similar to the one in figure 1A. However, the system in figure 1B is suitable for increasing the thickness of a continuous sheet of CNTs. The continuous sheet of CNTs, wet and already separated from the filter used to manufacture the sheet of CNTs, may be provided in rolls 145. A drying unit 11 is shown. The wet continuous sheet of CNTs, forming a roll 145, is moved forward while it is unrolled 147 towards the drying unit 11. The sheet of CNTs may be moved automatically, for example actioned by driving means (for example actioning the roll 148 at the outside of the drying unit 11). The continuous sheet of CNTs 147 may be moved continuously, at low speed, or may be moved portion by portion, in an intermittent way, that is to say, it may be moved until a first portion of sheet of CNTs is disposed within the working area of the drying area 13 and then stopped for a time sufficient to dry that first portion. And then the sheet of CNTs is moved forward until a second portion thereof is disposed within the working area of the drying area 13, and so on. In any case, the continuous sheet of CNTs 147 is heated while the continuous sheet of CNT is progressively moved, either continuously or intermittently, in its longitudinal direction. The heat 15 is applied locally, that is to say, only under or within the operation of the drying area 13. The driving means of the continuous sheet of CNTs 147 is preferably disposed outside the drying unit 11. The drying unit 11 has a heat source 12 configured to provide heat 15 to a drying area 13. The heat source 12 may be movable. The drying area 13 is delimited by screening means 16, configured to delimit the drying area 13, preventing the heat 15 from passing through the screening means 16, and to delimit the drying time, in particular in the event of continuous movement of the sheet of CNTs. The screening means 16 may be implemented by means of two fixed screens or two movable screens. The screening means 16 may be of any material capable of blocking the heat emitted by the heat source, and of supporting the working temperature. In some embodiments, the screens may be made of metal plates that can be fixed in different positions depending on the desired drying area. Thus, only a portion of continuous sheet of CNTs 147 (that is to say, the portion passing under the drying area 13) is exposed to heat 15. Since the continuous sheet of CNTs 147 moves longitudinally, either continuously or at intervals (discontinuously), it is exposed to heat 15 only when it passes under the drying area 13. At the output of the drying unit 11, the already dried continuous sheet of CNTs 149 may be continuously rolled, forming a roll 148. In other words, the dried continuous sheet of CNTs 149 is rolled while it leaves the drying unit 11. Due to the two rolls 145, 148 of sheets of CNTs, respectively disposed at the input and output of the drying unit 11, this configuration is referred to as a direct roll-to-roll configuration. The heating source 12 may be implemented in the same possible ways as described in relation to figure 1A. After application of this continuous process, the thickness of the resulting dry sheet of CNTs 149 has been increased. However, certain deformation in the sheet of CNTs may be produced, in particular at the longitudinal sides, due to uneven drying, contraction forces or any other possible source of deformation. This potential deformation is solved as proposed in the implementations of figures 2 and 3.

Figures 2 and 3 show different systems for carrying out the method of the invention, in which irregular deformation of the sheet of CNTs, which may occur in the drying process, is prevented by using means for preventing deformation.

Figure 2 shows a schematic representation of a third system for carrying out the method of the invention. Like the system in figure 1B, the system in figure 2 is suitable for increasing the thickness of a continuous sheet of CNTs. It additionally avoids undesired bending of the longitudinal edges of the sheet of CNTs. A drying unit 21 is shown. The wet continuous sheet of CNTs, that may be forming a roll 245, is advanced while it is unrolled 246 towards the drying unit 21. The sheet of CNTs 246 may be moved automatically. The drying unit 21 has a heat source 22 configured to provide heat 25 to a drying area 23. The drying area 23 is delimited by screening means 26, having the same purpose and implementation as the screening means 16 in the second system. Like in the second system (figure 1B), there is a first roll 245 of wet continuous sheet of CNTs at the input of the drying unit 21 and a second roll 248 of dried continuous sheet of CNTs at the output of the drying unit 21. In this embodiment, a plurality of rollers 27, 28, 29 guide the continuous sheet of CNTs 246. In figure 2, three rollers are shown. The rollers roll freely, without being actioned. They contribute to avoid deformations in the continuous sheet of CNTs 246. The first and third rollers 27, 29 are preferably disposed respectively at the input and output of the drying area 23. For example, they may be disposed beneath the screening means 26. While the continuous sheet of CNTs is unrolled 246, it is obliged to move under the first roller 27, forming a concave shape. Then, for example when it is exposed to heat 25 in the drying area 23, the continuous sheet of CNTs is obliged to move above the second roller 28 (central roller), forming a convex shape. Next, at the output of the drying area 23, the continuous sheet of CNTs is obliged to move under the third roller 29, following the path it defines, forming a concave shape. One skilled in the art will understand that other configurations of rollers are possible. For example, the first and third rollers 27, 28 may be disposed beneath the sheet of CNTs, in such a way that the continuous sheet of CNTs is obliged to move above the first roller 27, forming a convex shape, then under the second roller 28 (disposed in this case above the sheet of CNTs), forming a concave shape, and finally above the third roller 29, forming again a convex shape. The three rollers 27-29 may be of the same shape and diameter. Alternatively, the central roller 28 may have a larger diameter. After being guided by the last roller 29, the already dried continuous sheet of CNTs 247 may be continuously rolled, forming a roll 248. Because the plurality of rollers 27-29 are disposed to force the sheet of CNTs to adopt alternatively concave and convex shapes, the rollers 27-29 are referred to as straightening rolls, since they prevent deformation in the continuous sheet of CNTs. In embodiments of the invention, the rollers 27-29 force the continuous sheet of CNTs 246 advancing in its longitudinal direction, to depart from the horizontal plane several degrees. For example, the sheet of CNTs may form an angle up to 20° (degrees) with respect to the horizontal plane when it passes above/below the corresponding rollers 27-29. The angle may be for example up to 15°, or up to 12°, or up to 10°. Like in the previous systems, the heating source 22 may be implemented in different ways. According to the invention, an infrared (IR) irradiation source is used. In examples not falling under the scope of the claims, a convection source or hot air source is used. Other radiation sources, not falling under the scope of the claims, such as a ultra-violet (UV) irradiation source or an electrical resistance (ER) radiation source, may be used instead. After application of this continuous process, the thickness of the resulting dry sheet of CNTs 247 has been increased. Besides, thanks to the rollers 27-29, deformation in the sheet of CNTs, such as deformation in its longitudinal edges, has been prevented.

Figure 3 shows a schematic representation of a fourth system for carrying out the method of the invention. Like the system in figures 1B and 2, the system in figure 3 is suitable for increasing the thickness of a continuous sheet of CNTs. It additionally avoids undesired bending of the longitudinal edges of the sheet of CNTs. A drying unit 31, similar to drying units 11 21, is shown. The wet continuous sheet of CNTs, for example forming a roll 345, is advanced while it is unrolled 346 towards the drying unit 31. Like in the second and third systems, the sheet of CNTs may be moved automatically by means of driving means preferably located outside the drying unit 31 (for example actioning the second roll 348). Like in the first, second and third systems, the drying unit 31 has a heat source 32 configured to provide heat 35 to a drying area 33. A similar screening means 36 to the one used in the second and third systems, is used in this drying unit 31. Like in the second and third systems, there is a first roll 345 of wet continuous sheet of CNTs at the input of the drying unit 31 and a second roll 348 of dried continuous sheet of CNTs at the output of the drying unit 31. However, in this embodiment, the unrolled continuous sheet of CNTs 346, 347 is supported or guided by two support materials in order to prevent deformation of the sheet of CNTs, such as deformations in its longitudinal edges. The support materials may be implemented as conveyor belts 37, 38. A first conveyor belt 37 is disposed above the continuous sheet of CNTs 346, 347, longitudinally thereto, and very closed to its upper surface, preventing the sheet of CNTs from deforming upwards. A second conveyor belt 38 is disposed below the continuous sheet of CNTs 346, 347, longitudinally thereto, and very closed to its lower surface, therefore parallel to the first conveyor belt 37, preventing the sheet of CNTs from deforming downwards. In other words, the conveyor belts 37, 38 slightly press the sheet of CNTs in opposing directions, in order to maintain it straight (unwrinkled). The conveyor belts 37, 38 may be made of a porous material or may comprise a grillage, in order to favour the entrance of heat and also to favour liquid evaporation, therefore reducing the drying time. After being guided by the at least one conveyor belt, the already dried continuous sheet of CNTs 347 may be continuously rolled, forming a roll 348. Like in the previous systems, the heating source 32 may be implemented in different ways.

According to the invention, an infrared (IR) irradiation source is used. In examples not falling under the scope of the claims, a convection source or hot air source is used. Other radiation sources, not falling under the scope of the claims, such as a ultra-violet (UV) irradiation source or an electrical resistance (ER) radiation source, may be used instead. The thickness of the resulting dry sheet of CNTs has been increased.

In the examples/embodiments represented in figures 1A, 1B, 2 and 3, an increase in the thickness of the dried sheet of CNTs 146, 149, 247, 347, is observed, with respect to the thickness of the similar sheets of CNTs dried without removing the filtering element.

Next, some experiments that have been carried out are described.

In a first experiment, a first portion of sheet of CNTs produced by means of a conventional method for manufacturing sheets of CNTs (using a dispersion of multi-walled CNTs in a liquid medium, with random orientation, followed by filtration through a filtering membrane with the aid of vacuum) has been subjected to a conventional drying stage, that is to say, it has been dried without separating the sheet of CNTs from the filter support (or support, in general), with which the sheet of CNTs is washed. The dimensions of the portion of sheet of CNTs are approximately 70 mm (70 millimeters = 0.07 m) (length) x 46 mm (width). It has been dried with an infrared (IR) source of radiation (power of 1100W, distance of 45 cm between the CNT sheet and the infrared lamp). A second portion of sheet of CNTs is produced by means of exactly the same manufacturing method. It has the same dimensions as the first one. In fact, in some experiments the same BP has been cut in two portions (or more) that have been dried differently to have comparable results. However, instead of drying the sheet of CNTs without separating the sheet of CNTs from the filter support with which the sheet of CNTs was washed, both elements were separated and then dried using infra-red drying. In particular, a system similar to the one shown in figure 3 has been used. The heat source was the same infrared radiation source. No screen was required (because no continuous sheet of CNTs was being dried). In order to prevent deformation, the portion of sheet of CNTs was disposed on a flat porous surface of a metallic mesh (acting as the lower conveyor belt 38 in figure 3) and a porous sheet of a metallic mesh (acting as the upper conveyor belt 37 in figure 3) was disposed on the upper surface of the sheet of CNTs. After drying, the thickness of the first sample (dried according to a conventional method, without separating the sheet of CNTs from the filter element) was 66 µm (microns, 10⁻⁶ m) . In contrast, the thickness of the second sample (dried according to the method of the present invention), was 75 µm. Therefore, an increase of 13% was obtained. This experiment proves the capacity of the method of separation of the CNT from the support prior to infra-red heating to increase the thickness of the resulting sheet of CNTs. It is remarked that this comparison has been established, instead of comparing the same wet portion of sheet of CNTs before and after applying the method of the invention, because it is extremely complicated to correctly measure the thickness of a wet sheet of CNTs. Besides, the purpose of the method is to increase its thickness with respect to sheets of CNTs manufactured by means of conventional methods, in which the stage of drying is performed without separating the sheet of CNTs from the filter element.

In a second experiment, it has been proved that the thickness is increased for a wide range of thickness. First, three portions of sheet of CNTs were produced by means of a conventional method for manufacturing sheets of CNTs, but with different filtering times in order to obtain sheets of CNTs with different thickness. The three of them were subjected to a conventional drying stage, that is to say, they were dried without separating the sheet of CNTs from the filter support (or support, in general), with which each sheet of CNTs was washed. The dimensions of the portions of sheets of CNTs were approximately 45 mm (length) x 45 mm (width). They were dried with an infrared (IR) source of radiation (power of 1100W, distance of 45 cm between the CNT sheet and the infrared lamp). Next, three additional portions of sheet of CNTs were produced by means of exactly the same manufacturing method. They had the same dimensions as the first three ones. However, instead of drying the sheets of CNTs without separating the sheet of CNTs from the filter support with which each sheet of CNTs was washed, in the three cases both elements were separated and the method of the invention was applied. In particular, a system similar to the one described for the first experiment was used. The following table summarizes the results:

| | Resulting thickness (µm) -dried with conventional method | Resulting thickness (µm) -dried with method of the invention | Increase in thickness (%) |
|---|---|---|---|
| 1^{st} sample | 44.5 | 50.4 | 13 |
| 2^{nd} sample | 61.5 | 69.4 | 13 |
| 3^{rd} sample | 76.6 | 85.1 | 11 |

As can be observed, in all the cases an increase of at least 11% was achieved. In particular, in two cases it was of 13%. This experiment proves the capacity of the separating the CNTs from the filter support before infra-red heating to increase the thickness of the resulting sheet of CNTs for sheets of CNTs of different thickness.

In a third experiment useful to understand the invention, but not falling under the scope of the claims, it has been proved that the thickness is increased for a wide range of thickness also when the heating source is an air heater instead of an infrared source of radiation. First, three portions of sheet of CNTs were produced by means of a conventional method for manufacturing sheets of CNTs, but with different filtering times in order to obtain sheets of CNTs with different thickness. The three of them were subjected to a conventional drying stage, in this case with an air heater (2h at 105°C). In other words, they were dried without separating the sheet of CNTs from the filter support (or support, in general), with which each sheet of CNTs was washed. The sheets of CNTs had similar dimensions as in the previous experiments. Next, three additional portions of sheet of CNTs were produced by means of exactly the same manufacturing method. They had the same dimensions as the first three ones. However, instead of drying the sheets of CNTs without separating the sheet of CNTs from the filter support with which each sheet of CNTs was washed, in the three cases both elements were separated and the method of drying by air heating was applied. In particular, a system similar to the one described for the first and second experiments, was used. The following table summarizes the results:

| | Resulting thickness (µm) -dried with conventional method | Resulting thickness (µm) -dried after separating sheet of CNTs from filtering support | Increase in thickness (%) |
|---|---|---|---|
| 1^{st} sample | 42.0 | 44.7 | 6 |
| 2^{nd} sample | 60.3 | 64.2 | 6 |
| 3^{rd} sample | 69.9 | 75.8 | 8 |

As can be observed, if an air heater is used instead of an infrared source of radiation, an increase in the thickness of the resulting sheet of CNTs is also achieved. However, the increase is larger when an infrared source of radiation is used.

Although the former experiments refer to "static" or batch portions of sheets of CNTs, that is to say, portions of sheets of CNTs of width and length of the same order of magnitude, (these experiments not falling under the scope of the claims), these experiments have also been performed in a dynamic configuration (with continuous sheets of CNTs, for example provided in rolls). In all the cases, an increase in the thickness of the resulting sheets of CNTs, similar to the ones shown in experiments 1-3, has been observed. In sum, the method of the invention permits to save production time, thus increasing efficiency, thanks to the obtained increase in the thickness of the sheet of CNTs. For example, the graph represented in figure 6 shows the thickness vs time curve corresponding to a conventional process for manufacturing a sheet of CNTs. The behavior of this curve is not linear: in 30% of the nominal time, 50% of the thickness is generated. The filtration time is defined by the line speed. The production capacity (sqm) is also dependent on the line speed: higher line speeds lead to higher BP production (sqm) of lower thickness, while lower line speeds lead to lower BP production (sqm) of higher thickness. As shown in figure 7, because the method of the invention permits to obtain an increase in thickness of about 13%, the approximately last 22% of time required for achieving certain thickness using a conventional manufacturing method is saved.

In this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for increasing the thickness of a sheet of CNTs (146, 147, 246, 346), comprising:
providing a wet continuous sheet of CNTs, wherein a continuous sheet of CNTs is an elongated sheet whose length is orders of magnitude greater than its width and wherein the wet continuous sheet of CNTs has been manufactured as follows:
in a container (41) filled with a liquid solution (42) comprising CNTs at certain concentration, submerging a vacuum tank (43) having a lower surface forming a grillage,
moving an elongated filtering membrane (44) along the lower surface of the vacuum tank (43) while vacuum is applied on the elongated filtering membrane (44) in such a way that in the surface of the filtering membrane (44) opposed to the surface in contact with the lower surface of the vacuum tank (43) CNTs are deposited forming a continuous sheet of CNTs (45) of constant thickness,
taking the filtering membrane (44) together with the continuous sheet of CNTs (45) out of the container (41),
separating the wet continuous sheet of CNTs (45) from the filtering membrane (44),
drying the wet continuous sheet of CNTs (146, 147, 246, 346) by applying heat (15, 25, 35) from a heat source (12, 22, 32), wherein the heat source is an infrared irradiation source.

2. The method of claim 1 wherein the drying stage implies a continuous advancing of the sheet of CNTs, or an intermittent advancing thereof, or is static.

3. The method of any preceding claims, wherein the drying of the wet continuous sheet of CNTs is done as follows:
moving forward the wet continuous sheet of CNTs (147, 246, 346) in a longitudinal direction until a portion thereof is disposed within a drying unit (11, 21, 31) comprising the heat source (12, 22, 32), the heat source (12, 22, 32) being configured to provide heat (15, 25, 35) to a drying area (13, 23, 33), the drying unit (11, 21, 31) further comprising screening means (16, 26, 36) for delimiting said drying area (13, 23, 33), in such a way that the portion of continuous sheet of CNTs is subject to heat (15, 25, 35) only until while it is under the drying area (13, 23, 33).

4. The method of claim 3 wherein the drying unit (21) further comprises a plurality of rollers (27, 28, 29) configured to rotate freely and to guide the continuous sheet of CNTs along its longitudinal direction, forcing the continuous sheet of CNTs to adopt soft convex and concave curvatures in an alternate way.

5. The method of claim 4 wherein said plurality of rollers (27, 28, 29) comprises a central roller (28) disposed under the drying area (23) and lateral rollers (27, 29) disposed under the screening means (16).

6. The method of claim 3, wherein the drying unit (31) further comprises two conveyor belts (37, 38) configured to guide the continuous sheet of CNTs (346) in its longitudinal direction, the conveyor belts (37, 38) being longitudinally disposed above and below the continuous sheet of CNTs (346), respectively.

7. The method of claim 6, wherein at least one conveyor belt (37, 38) is made of a porous material or comprises a grillage, in order to favour the entrance of heat and also to favour liquid evaporation, therefore reducing the drying time.

8. The method of any preceding claim, wherein prior to separating the continuous sheet of CNTs (45) from the filtering membrane (44), the method comprises:
washing the continuous sheet of CNTs (55) disposed on the filtering membrane (54) in a second container (51) filled with cleaning solution (52),
taking the continuous sheet of CNTs (55) together with the filtering membrane (54) out of the second container (51).

## Patentansprüche

1. Verfahren zur Erhöhung der Dicke eines Blatts von CNTs (146, 147, 246, 346), umfassend:
Bereitstellen eines nassen kontinuierlichen Blatts von CNTs, wobei ein kontinuierliches Blatt von CNTs ein längliches Blatt ist, dessen Länge um Größenordnungen größer ist als dessen Breite, und wobei das nasse kontinuierliche Blatt von CNTs wie folgt hergestellt wurde:
in einem Behälter (41), der mit einer flüssigen Lösung (42) gefüllt ist, umfassend CNTs in einer bestimmten Konzentration, Eintauchen eines Vakuumtanks (43) mit einer unteren Oberfläche, die ein Gitter bildet,
Bewegen einer langgestreckten Filtermembran (44) entlang der unteren Oberfläche des Vakuumtanks (43), während Vakuum auf die langgestreckte Filtermembran (44) aufgebracht wird, so dass sich in der Oberfläche der Filtermembran (44), die der mit der unteren Oberfläche des Vakuumtanks (43) in Kontakt stehenden Oberfläche gegenüberliegt, CNTs ablagern und ein kontinuierliches Blatt von CNTs (45) konstanter Dicke bilden,
Herausnehmen der Filtermembran (44) zusammen mit dem kontinuierlichen Blatt von CNTs (45) aus dem Behälter (41),
Trennen des nassen kontinuierlichen Blatts von CNTs (45) von der Filtermembran (44),
Trocknen des nassen kontinuierlichen Blatts von CNTs (146, 147, 246, 346) durch Aufbringen von Wärme (15, 25, 35) aus einer Wärmequelle (12, 22, 32), wobei die Wärmequelle eine Infrarot-Strahlungsquelle ist.

2. Verfahren nach Anspruch 1, wobei die Trocknungsstufe ein kontinuierliches Vorschieben des Blatts von CNTs oder ein intermittierendes Vorschieben derselben impliziert, oder statisch ist.

3. Verfahren nach einem der vorhergehenden Ansprüche, wobei das Trocknen des nassen kontinuierlichen Blatts von CNTs wie folgt durchgeführt wird:
Vorwärtsbewegen des nassen kontinuierlichen Blatts von CNTs (147, 246, 346) in einer Längsrichtung, bis ein Teil davon in einer Trocknungseinheit (11, 21, 31) angeordnet ist, die die Wärmequelle (12, 22, 32) umfasst, wobei die Wärmequelle (12, 22, 32) eingerichtet ist, um Wärme (15, 25, 35) zu einem Trocknungsbereich (13, 23, 33) zuzuführen, wobei die Trocknungseinheit (11, 21, 31) ferner Abschirmmittel (16, 26, 36) umfasst, um den Trocknungsbereich (13, 23, 33) so zu begrenzen, dass der Teil des kontinuierlichen Blatts von CNTs nur solange der Wärme (15, 25, 35) ausgesetzt ist, wie er sich unter dem Trocknungsbereich (13, 23, 33) befindet.

4. Verfahren nach Anspruch 3, wobei die Trocknungseinheit (21) ferner eine Vielzahl von Walzen (27, 28, 29) umfasst, die so eingerichtet sind, um sich frei zu drehen und das kontinuierliche Blatt von CNTs entlang ihrer Längsrichtung zu führen, wodurch das kontinuierliche Blatt von CNTs gezwungen wird, alternierend weiche konvexe und konkave Krümmungen anzunehmen.

5. Verfahren nach Anspruch 4, wobei die Vielzahl von Walzen (27, 28, 29) eine zentrale Walze (28) umfasst, die unter dem Trocknungsbereich (23) angeordnet ist, und seitliche Walzen (27, 29), die unter der Siebeinrichtung (16) angeordnet sind.

6. Verfahren nach Anspruch 3, wobei die Trocknungseinheit (31) ferner zwei Förderbänder (37, 38) umfasst, die eingerichtet sind, um das kontinuierliche Blatt von CNTs (346) in ihrer Längsrichtung zu führen, wobei die Förderbänder (37, 38) in Längsrichtung oberhalb bzw. unterhalb des kontinuierlichen Blatts von CNTs (346) angeordnet sind.

7. Verfahren nach Anspruch 6, wobei zumindest eines von den Förderbändern (37, 38) aus einem porösen Material besteht oder ein Gitter umfasst, um den Eintritt von Wärme zu begünstigen und die Verdunstung von Flüssigkeit zu begünstigen, hierdurch die Trocknungszeit verkürzend.

8. Verfahren nach einem der vorhergehenden Ansprüche, wobei das Verfahren vor dem Trennen des kontinuierlichen Blatts von CNTs (45) von der Filtermembran (44) umfasst: Waschen des auf der Filtermembran (54) angeordneten kontinuierlichen Blatts von CNTs (55) in einem mit Reinigungslösung (52) gefüllten zweiten Behälter (51), Entnehmen des kontinuierlichen Blatts von CNTs (55) zusammen mit der Filtermembran (54) aus dem zweiten Behälter (51).

## Revendications

1. Procédé pour augmenter l'épaisseur d'une feuille de NTC (146, 147, 246, 346), comprenant les étapes consistant à :
Fournir une feuille continue humide de NTC, où une feuille continue de NTC est une feuille allongée dont la longueur est supérieure de plusieurs ordres de grandeur à sa largeur, et où
la feuille continue humide de NTC a été fabriquée comme suit :
dans un récipient (41) rempli d'une solution liquide (42) comprenant des NTC à une certaine concentration, immerger un réservoir sous vide (43) ayant une surface inférieure formant un grillage,
déplacer une membrane filtrante allongée (44) le long de la surface inférieure du réservoir sous vide (43) tout en appliquant un vide sur la membrane filtrante allongée (44) de telle sorte que des NTC sont déposés dans la surface de la membrane filtrante (44) opposée à la surface en contact avec la surface inférieure du réservoir sous vide (43) en formant une feuille continue de NTC (45) d'épaisseur constante,
sortir du récipient (41) la membrane filtrante (44) avec la feuille continue de NTC (45),
séparer la feuille continue humide de NTC (45) de la membrane filtrante (44),
sécher la feuille continue humide de NTC (146, 147, 246, 346) en appliquant de la chaleur (15, 25, 35) provenant d'une source de chaleur (12, 22, 32), la source de chaleur étant une source d'irradiation infrarouge.

2. Procédé selon la revendication 1, dans lequel l'étape de séchage implique un avancement continu de la feuille de NTC, ou un avancement intermittent de celle-ci, ou est statique.

3. Procédé selon l'une quelconque des revendications précédentes, dans lequel le séchage de la feuille continue humide de NTC est réalisé comme suit :
faire avancer la feuille continue humide de NTC (147, 246, 346) dans une direction longitudinale jusqu'à ce qu'une partie de celle-ci soit disposée dans une unité de séchage (11, 21, 31) comprenant la source de chaleur (12, 22, 32), la source de chaleur (12, 22, 32) étant configurée pour fournir de la chaleur (15, 25, 35) à une zone de séchage (13, 23, 33), l'unité de séchage (11, 21, 31) comprenant en outre des moyens d'écran (16, 26, 36) pour délimiter ladite zone de séchage (13, 23, 33), de telle sorte que la partie de la feuille continue de NTC est soumise à la chaleur (15, 25, 35) seulement tant qu'elle est sous la zone de séchage (13, 23, 33).

4. Procédé selon la revendication 3, dans lequel l'unité de séchage (21) comprend en outre une pluralité de rouleaux (27, 28, 29) configurés pour tourner librement et pour guider la feuille continue de NTC le long de sa direction longitudinale, en forçant la feuille continue de NTC à adopter des courbures convexes et concaves douces de manière alternée.

5. Procédé selon la revendication 4, dans lequel ladite pluralité de rouleaux (27, 28, 29) comprend un rouleau central (28) disposé sous la zone de séchage (23) et des rouleaux latéraux (27, 29) disposés sous le moyen d'écran (16).

6. Procédé selon la revendication 3, dans lequel l'unité de séchage (31) comprend en outre deux bandes transporteuses (37, 38) configurées pour guider la feuille continue de NTC (346) dans sa direction longitudinale, les bandes transporteuses (37, 38) étant disposées longitudinalement respectivement au-dessus et en dessous de la feuille continue de NTC (346).

7. Procédé selon la revendication 6, dans lequel au moins une bande transporteuse (37, 38) est réalisée en un matériau poreux ou comprend une grille, afin de favoriser la pénétration de la chaleur et également de favoriser l'évaporation du liquide, réduisant ainsi le temps de séchage.

8. Procédé selon l'une quelconque des revendications précédentes, dans lequel avant de séparer la feuille continue de NTC (45) de la membrane filtrante (44), le procédé comprend les étapes consistant à :
laver la feuille continue de NTC (55) disposée sur la membrane filtrante (54) dans un second récipient (51) rempli d'une solution de nettoyage (52),
sortir du second récipient (51) la feuille continue de NTC (55) avec la membrane filtrante (54).
